# EUROPEAN PATENT SPECIFICATION

(11) **EP 2 008 509 B1**
(45) Date of publication and mention of the grant of the patent: **17.07.2013**
(21) Application number: 08158087.0
(22) Date of filing: 12.06.2008
(51) Int. Cl.: A01G 9/22

(54) **Greenhouse or glasshouse comprising an external screen**
Gewächshaus oder Glashaus mit einem Aussenschirm
Serre ou verrière pourvue d'un écran extérieur

(30) Priority: 12.06.2007 NL 2000698
(43) Date of publication of application: 31.12.2008
(73) Proprietor: Van Der Valk Systemen B.V., 2681 LP Monster (NL)
(72) Inventor: van Deursen, Adrianus Gerardus, 2253 HA, Voorschoten (NL)
(74) Representative: Nederlandsch Octrooibureau

(56) References cited:
- NL-A- 8 600 269
- NL-C2- 1 028 754

## Description

The invention relates to a greenhouse or glasshouse structure comprising a cover composed of parallel gutters and ridges, and supported by columns, light-transmitting panels between a gutter and a ridge, as well as a screen installation supported on the ridges and having stop profiles extending transversely above the ridges, supporting means between the ridges and the stop profiles, screen profiles, screen cloths which are in each case provided between a stop profile and a screen profile, as well as guide and drive means for moving the screen profiles and screen cloths between an open position, in which the screen cloths are pushed together to form a packet between in each case a stop profile and a screen profile, and a closed position in which the screen cloths cover an area.

A structure of this type is known from Dutch patent 1,028,754. In this known structure, the screen installation is attached at some distance above the ridges of the cover by means of frames. The attachment means of these frames are screwed on in such a way that they can absorb lateral loads on the screen installation. However, if great forces, such as wind forces, are exerted on the support structure of the screen installation, these attachment means can pivot in order to protect the screen installation more efficiently. Furthermore, it is intended to make it possible for the frames to perform a pivoting movement by loosening the attachment means in such a way that the position of the screen installation can be modified. After the screen installation has reached the desired position, the attachment means have to be tightened again.

Although in this known structure the screen installation is firmly supported on the greenhouse cover, there are a number of drawbacks associated with it relating to the loads which are exerted on the greenhouse cover by the screen installation. These drawbacks result from the fact that the supporting means or frames which support the screen installation on the greenhouse cover also play a part in absorbing lateral loads. When such loads occur, a torque is transferred onto the ridges at the location where the attachment means of the frames are attached to the ridges. However, the traditional ridges are designed as lightweight profiles, not only because the ridges themselves are usually only subjected to a light load, but also because it is desirable that they cause as little of a shadow effect as possible.

The result of these circumstances is that such loads deform the ridges to a relatively large degree, and can thus both bend and twist. As the upper edge of the light-transmitting panels, usually glass panels, are accommodated in a rebate provided on the ridges, such deformations result in loads on the panels. Particularly in the case of glass panels, this leads to breakage.

It is therefore an object of the invention to provide a greenhouse or glasshouse structure of the kind described in the preamble which does not suffer from these problems. This object is achieved by the fact that the attachment means of the supporting means with the ridges and/or the attachment means of the supporting means with the stop profiles are substantially torque-free with respect to rotations about an axis of rotation parallel to the ridges and that stabilizing means are provided for stabilizing the screen installation with respect to forces and/or movements which are directed transversely to the ridges.

With the greenhouse or glasshouse structure according to the invention, the ridges still serve as support for the screen installation, which first of all results in the advantages associated therewith being obtained. These advantages comprise protecting the greenhouse or the glasshouse in its entirety from incident light and heat, and also preventing emission of light and/or heat at night. In addition, it remains possible to provide efficient ventilation of the greenhouse or the glasshouse, as the ventilation windows provided in the cover under the screen installation can be opened. However, the advantage of the structure according to the invention is that overloading of the ridges is prevented due to the torque-free attachment of the supporting means. As a result thereof, twisting of the ridges is prevented and the panels cannot be subjected to undesirable loads.

In addition, separate stabilizing means are provided, which ensure that the screen installation is supported on the ridges in a stable manner against forces and/or movements which are directed transversely with respect to the ridges. These stabilizing means may be designed in a variety of ways. According to a first possibility, the stabilizing means comprise at least one strut which extends obliquely between the screen installation and the cover or a column and which is directed obliquely with respect to a stop profile. Preferably, each strut is attached to an associated stop profile. Preferably, the struts each extend between a stop profile and a gutter, which results in a very effective stabilization. Preferably, the strut is attached to the gutter which is situated on the side wall of the greenhouse structure, so that the cover remains accessible for the carriages which are supported in the gutter, in connection with the cleaning and repair of the cover.

Alternatively, the screen installation may be stabilized by a post attached to a column or the cover.

The supporting means may be designed in various ways. Preferably, they comprise pairs of supports which extend downwards in a diverging manner from in each case a stop profile to a ridge underneath it. Such supports can be formed in a simple manner by tubes or rods having cross-sectional dimensions which are such that they can provide the desired stability (against buckling) with respect to compressive loads.

In order to provide a strong and rigid support of the screen installation, the supports, at their end which is turned towards a stop profile, may be attached in a manner so as not to be rotatable with respect to one another. However, the substantially torque-free attachment of the supports has to be retained in this case. These two conflicting requirements can be reconciled with one another if the attachment means of the supports to the stop profile comprises an attachment piece to which the supports are secured, which attachment piece is in turn attached in a torque-free manner to the stop profile. The supports may, for example, be secured to the attachment piece by means of a bolted connection, but other securing arrangements are also possible, such as by means of rivets and the like or a connection by means of mating shapes.

The non-rotatable attachment of the supports may be achieved in various ways; by way of example, the embodiment in which the supports are attached to the attachment piece by at least one further attachment means is mentioned. The double connection between the supports and the attachment piece means that the supports are stabilized with respect to rotations. The further attachment means may comprise a bolted connection, tenon/mortise joint and the like.

The stop profiles may be supported by a supporting profile part having flanges which point downwards, between which flanges the attachment piece is accommodated. In this case, a hinge pin may be provided which extends through the flanges and through the attachment piece. Furthermore, the width of the attachment piece may be smaller than the distance between the mutually facing surfaces of the flanges of the supporting profile part.

As has already been mentioned above, the supporting means are also attached to the ridges. In order to prevent further torsional loads on the ridges, ridge clamps may be provided which are clamped to a ridge, to which ridge clamps in each case a support is attached in a torque-free manner. The ridges usually have laterally projecting flanges, onto which ridge clamps of suitable design can readily be hooked and clamped.

Furthermore, each ridge clamp may comprise a pin which extends parallel to the ridge and to which in each case a support is attached. Said pin may extend between two saddles provided on the ridge clamp, in which that end of the support which is turned towards the ridge is accommodated between the saddles and is provided with a hole through which the pin extends.

As has already been mentioned above, the supports may comprise tubes or rods which are in each case provided with an attachment lip on that end which is turned towards the stop profile and on that end which is turned towards the ridge. The pins and/or bolts then extend through these lips, which make the non-rotatable attachment of the supports to the attachment piece possible.

The invention will be explained in more detail below with reference to an exemplary embodiment illustrated in the figures.
Fig. 1 shows a perspective view of the greenhouse structure according to the invention;
Fig. 2 shows a perspective view of a detail along II in Fig. 1;
Fig. 3 shows a perspective view of a detail along III in Fig. 1;
Fig. 4 shows a cross-sectional view of a detail of a variant for II from Fig. 1;
Fig. 5 shows a cross-sectional view of a detail of a further variant for II from Fig. 1.

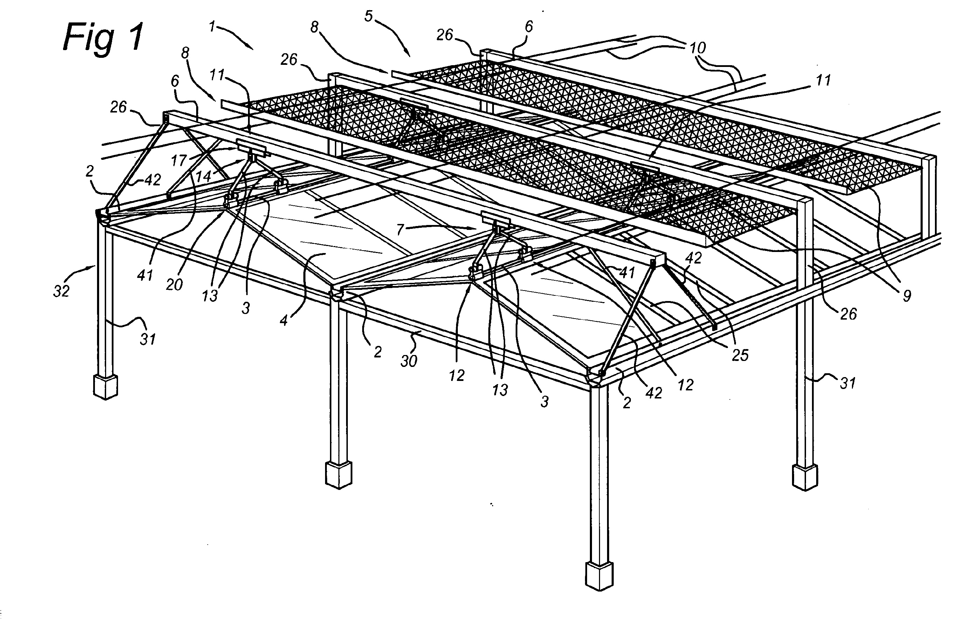

The greenhouse structure according to the invention illustrated in Fig. 1 comprises a cover denoted overall by reference numeral 1 and composed of the parallel gutters 2, ridges 3, bars 25 and glass panels 4 accommodated between them. The cover 1 is supported on joists 30 in the usual manner, which are arranged one behind the other in an evenly distributed manner in the longitudinal direction of the cover. These joists 30 are supported by columns 31 in a known manner.

The screen installation, which is denoted overall by reference numeral 5, is arranged on the cover 1. Said screen installation is composed of stop profiles 6 which are supported transversely above the ridges. These stop profiles are supported by means of the supporting means 7 which in each case extend between a ridge 3 and the stop profiles 6.

The screen installation is composed of screen profiles 8 and screen cloths 9 which are attached on one side to the screen profile 8 and to a stop profile 6 on the other side. By means of the means 10 which, in a known manner, comprise support wires which extend below and above the stop profiles 6, the screen profiles 8 and the screen cloths 9, the screen cloths 9 and the screen profiles 8 are supported when moving towards and away from the associated stop profile 6. The screen profiles 8 may be moved to and fro in a known manner by means of drive means (not illustrated), such as a rod or a towing cable.

As has been discussed above, the screen installation 5 is supported on the ridges 3 of the cover 1. This has the advantage that the gutters 2 remain free, so that it is possible to pass, for example, carriages through them in order to clean the cover and the like. However, the drawback of supporting the screen installation 5 on the ridges 3 may be that the ridges are consequently subjected to a high load. In particular, loads which are directed transversely to the ridges may cause problems, since such loads on the screen installation 5 may cause twisting of the ridges to such a degree that even the glass panels 4 held in the ridges 3 break.

These undesirable torsional loads on the ridges 3 may be prevented by constructing the supporting means 7 in such a manner that they are torque-free. The stabilization of the screen installation 5 with respect to forces transverse to the ridges 3 then takes place at the end of the stop profiles 6, where the stop profiles 6 are connected to a stabilizer 41. Said stabilizer may be designed as a strut 41, which extends obliquely downwards with respect to the stop profile 6. The strut 41 is at an angle to the stop profile 6 which is different to a right angle, as a result of which the strut is able to have a stabilizing effect. The strut 41 is attached to the stop profile 6 and a gutter 2. Furthermore, the end of the stop profile 6 is supported on the gutter 2 by supports 42 which run obliquely. Alternatively, the stop profile may be stabilized by means of a post or a column which is provided in the side wall 32.

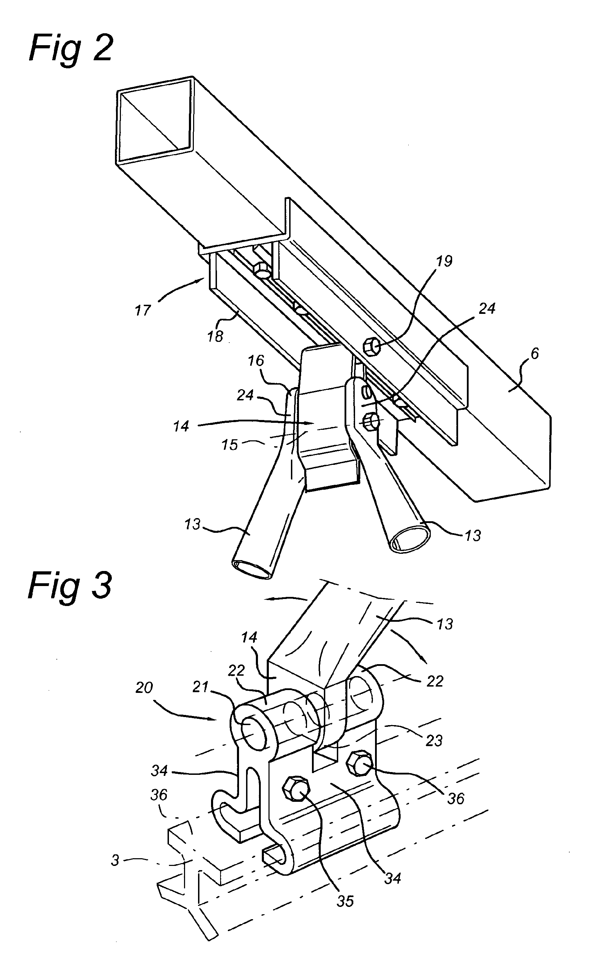

Fig. 2 illustrates a first torque-free connection between the supporting means 7 and a stop profile 6. Said supporting means 7 are composed of the actual tubular supports 13, which are each provided at their top ends with an attachment lip 24. Between said attachment lips 24, an attachment piece 14 is accommodated which, by means of two bolts 15, 16, results in a rigid, non-rotatable attachment between the supports 13. Instead of two bolts, it is also possible to use a single bolt in combination with a further tenon/mortise joint, mating shapes and the like.

The attachment piece 14 is in turn attached to the flanges 18 of the supporting profile part 17 by means of the torque-free pivot attachment means 19, in particular the hinge pin 19. In this supporting profile part 17, which has upwardly directed flanges, the stop profile 6 is secured by means of bolts 33.

At their bottom end, the supports 13 also have an attachment lip 14. Said attachment lip 14 is accommodated between the two saddles 22 of the ridge clamp denoted overall by reference numeral 20. A hinge pin 21 extends between the saddles 22, which is inserted into the hole 23 of the attachment lip in such a manner that pivoting movements are possible. The ridge clamp 20 has two formed flanges 34, which are clamped together by means of the bolted connections 35 in such a manner that the top flange 36 of the ridge 3 is firmly secured therebetween.

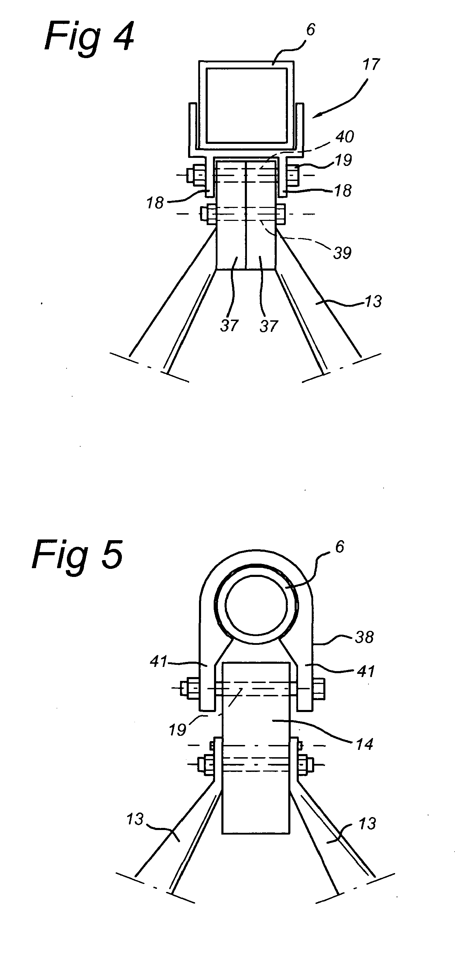

In the variant from Fig. 4, the supports 13 each have an attachment block 37 at their top end, which attachment blocks 37 are attached to one another by means of the bolted connection 39. The attachment blocks 37 furthermore have a hole 40 into which the hinge pin 19 is inserted. Thus, the attachment blocks 37 cannot be rotated with respect to one another and form a unit which is pivotable about the hinge pin 19.

In the variant from Fig. 5, the stop profile 6 is designed as a tube with a circular cross section. Around said tube 6, a clamp 38 is fitted, the flanges 41 of which are pulled towards one another by means of the hinge pin 19. The clamp 38 is thus firmly connected to the tube 6. In this variant, an attachment piece 14 such as that illustrated in Fig. 2 is used, to which the supports 13 are then attached in an analogous manner. The attachment piece 14 is thus pivotable with respect to the tube 6.

## Claims

1. Greenhouse or glasshouse structure comprising a cover (1) composed of parallel gutters (2) and ridges (3), and supported by columns (31), light-transmitting panels (4) between a gutter (2) and a ridge (3), as well as a screen installation (5) supported on the ridges (3) and having stop profiles (6) extending transversely above the ridges, supporting means (7) between the ridges (3) and the stop profiles (6), screen profiles (8), screen cloths (9) which are in each case provided between a stop profile (6) and a screen profile (8), as well as guide and drive means (10) for moving the screen profiles (8) and screen cloths (9) between an open position, in which the screen cloths (9) are pushed together to form a packet between in each case a stop profile (6) and a screen profile (8), and a closed position in which the screen cloths (9) cover an area, **characterized in that** the attachment means (11) of the supporting means (7) with the stop profiles (6) and/or the attachment means (12) of the supporting means (7) with the ridges (3) are substantially torque-free with respect to rotations about an axis of rotation parallel to the ridges (3) and **in that** stabilizing means (26) are provided for stabilizing the screen installation (5) with respect to forces and/or movements which are directed transversely to the ridges (3).

2. Greenhouse or glasshouse structure according to Claim 1, in which the supporting means (7) comprise pairs of supports (13) which extend downwards in a diverging manner from in each case a stop profile (6) to a ridge (3) underneath it.

3. Greenhouse or glasshouse structure according to Claim 2, in which the supports (13), at their end which is turned towards a stop profile (6), are attached in a manner so as not to be rotatable with respect to one another.

4. Greenhouse or glasshouse structure according to Claim 2 or 3, in which the attachment means (11) of the supports (13) to the stop profile (6) comprises an attachment piece (14) to which the supports (13) are secured, which attachment piece (14) is attached in a torque-free manner to the stop profile (6).

5. Greenhouse or glasshouse structure according to Claim 2 or 3, in which the supports (13) each have an attachment block (37), which attachment blocks (37) are attached to one another and connected to the stop profile (6) in a torque-free manner.

6. Greenhouse or glasshouse structure according to Claim 5, in which the attachment blocks (37) attached to one another form a through-hole (40) into which a hinge pin (19) is inserted which is attached to the stop profile (6).

7. Greenhouse or glasshouse structure according to one of Claims 2-6, in which ridge clamps (20) are provided which are clamped to a ridge (3), to which ridge clamps (20) a support (13) is in each case attached in a torque-free manner.

8. Greenhouse or glasshouse structure according to Claim 7, in which each ridge clamp (20) comprises a pin (21) which extends parallel to the ridge and to which in each case a support (13) is attached.

9. Greenhouse or glasshouse structure according to Claim 8, in which the pin (21) extends between two saddles (22) provided on the ridge clamp (20) and that end of the support (13) which is turned towards the ridge (3) is accommodated between the saddles (22) and is provided with a hole (23) through which the pin (21) extends.

10. Greenhouse or glasshouse structure according to one of Claims 2-9, in which the supports comprise tubes (13) or rods which are in each case provided with an attachment lip (24) on that end which is turned towards the stop profile (6) and on that end which is turned towards the ridge (3).

11. Greenhouse or glasshouse structure according to one of the preceding claims, in which the cover (1) comprises bars (25) which extend obliquely upwards in pairs from two neighbouring gutters (2) to a ridge (3), and the light-transmitting panels (4) are in each case accommodated between two bars (25).

12. Greenhouse or glasshouse structure according to one of the preceding claims, in which the stabilizing means comprise at least one post (26) attached to a column (31) or the cover (1), which post (26) is attached to the screen installation (5).

13. Greenhouse or glasshouse structure according to one of the preceding claims, in which the stabilizing means comprise at least one strut (41) which extends obliquely between the screen installation (5) and the cover (1) or a column (31) and which is directed obliquely with respect to a stop profile (6).

14. Greenhouse or glasshouse structure according to Claim 13, in which the strut (41) is attached to the stop profile (6).

15. Greenhouse or glasshouse structure according to Claim 13 or 14, in which the strut (41) is at an angle to the stop profile (6) which is different from a right angle.

## Patentansprüche

1. Treibhaus- oder Glashausanordnung mit einer Abdeckung (1), welche parallele Rinnen (2) und Firste (3) umfasst, und durch Säulen (31) gestützt, lichtdurchlässigen Platen(4) zwischen einer Rinne (2) und einem First (3), sowie einer Schirminstallation (5), welche auf die Firsten (3) gestützt ist und Stoppprofile (6) aufweisend, welche sich quer über die Firste erstecken, eine Stützeinrichtung (7) zwischen den Firsten (3) und den Stoppprofilen (6), Schirmprofilen (8), Schirmgeweben (9), welche in jeweils zwischen einem Stoppprofil (6) und einem Schirmprofil (8) bereitgestellt sind, sowie eine Führungs- und Antriebseinrichtung (10) zum Bewegen der Schirmprofile (8) und Schirmgewebe (9) zwischen einer offenen Lage, in welcher die Schirmgewebe (9) zusammengedrückt sind, um ein Paket zwischen jeweils einem Stoppprofil (6) und einem Schirmprofil (8) zu bilden, und einer geschlossenen Lage, in welcher die Schirmgewebe (9) eine Fläche bedecken, **dadurch gekennzeichnet, dass** die Befestigungseinrichtung (11) der Stützeinrichtung (7) mit den Stoppprofilen (6) und/oder die Befestigungseinrichtung (12) der Stützeinrichtung (7) mit den Firsten (3) im Wesentlichen drehmomentfrei in Bezug zu Drehungen um eine Drehachse sind, welche parallel zu den Firsten (3) ist, und dass eine Stabilisierungseinrichtung (26) zum Stabilisieren der Schirminstallation (5) in Bezug zu Kräften und/oder Bewegungen bereitgestellt ist, welche quer zu den Firsten (3) gerichtet sind.

2. Treibhaus- oder Glashausanordnung nach Anspruch 1, wobei die Stützeinrichtung (7) Paare von Stützen (13) umfasst, welche sich abwärts in einer auseinanderlaufenden Weise von jeweils einem Stoppprofil (6) zu dem First (3) darunter erstrecken.

3. Treibhaus- oder Glashausanordnung nach Anspruch 2, wobei die Stützen (13), an deren Ende, welches einem Stoppprofil (6) zugewendet ist, in einer Weise befestigt sind, dass diese nicht in Bezug zueinander drehbar sind.

4. Treibhaus- oder Glashausanordnung nach Anspruch 2 oder 3, wobei die Befestigungseinrichtung (11) der Stützen (13) zu dem Stoppprofil (6) ein Befestigungsstück (14) umfasst, an welchem die Stützen (13) gesichert sind, wobei das Befestigungsstück (14) auf eine drehmomentfreie Weise an dem Stoppprofil (6) befestigt ist.

5. Treibhaus- oder Glashausanordnung nach Anspruch 2 oder 3, wobei die Stützen (13) jeweils einen Befestigungsblock (37) aufweisen, wobei die Befestigungsblöcke (37) aneinander befestigt und mit den Stoppprofilen (6) auf eine drehmomentfreie Weise verbunden sind.

6. Treibhaus- oder Glashausanordnung nach Anspruch 5, wobei die Befestigungsblöcke (37), welche aneinander befestigt sind, eine Durchgangsöffnung (40) bilden, in welche ein Gelenkstift (19) eingefügt ist, welcher an dem Stoppprofil (6) befestigt ist.

7. Treibhaus- oder Glashausanordnung nach einem der Ansprüche 2 bis 6, wobei Firstklammern (20) bereitgestellt sind, welche an einen First (3) geklemmt sind, wobei an den Schienenklammern (20) jeweils eine Stütze (13) auf eine drehmomentfreie Weise befestigt ist.

8. Treibhaus- oder Glashausanordnung nach Anspruch 7, wobei jede Firstklammer (20) einen Stift (21) umfasst, welcher sich parallel zu dem First erstreckt und an welchem jeweils eine Stütze (13) befestigt ist.

9. Treibhaus- oder Glashausanordnung nach Anspruch 8, wobei sich der Stift (21) zwischen zwei Sätteln (22) erstreckt, welche auf der Firstklammer (20) bereitgestellt sind und das Ende der Stütze (13), welches dem First (3) zugewandt ist, zwischen den Sätteln (22) untergebracht ist und ein Loch (23) aufweist, durch welches sich der Stift (21) erstreckt.

10. Treibhaus- oder Glashausanordnung nach einem der Ansprüche 2 bis 9, wobei die Stützen Röhren (13) oder Stangen umfassen, welche jeweils mit einer Befestigungslippe (24) an dem Ende bereitgestellt sind, welches dem Stoppprofil (6) zugewandt ist und an dem Ende, welches dem First (3) zugewandt ist.

11. Treibhaus- oder Glashausanordnung nach einem der vorstehenden Ansprüche, wobei die Abdeckung (1) Stangen (25) umfasst, welche sich schräg aufwärts in Paaren von zwei benachbarten Rinnen (2) zu einem First (3) erstrecken, und die lichtdurchlässigen Elemente (4) jeweils zwischen zwei Stangen (25) aufgenommen sind.

12. Treibhaus- oder Glashausanordnung nach einem der vorstehenden Ansprüche, wobei die Stabilisierungseinrichtung zumindest einen einzelnen Pfosten (26) umfasst, welcher an eine Säule (31) oder der Abdeckung (1) befestigt ist, wobei der Pfosten (26) an der Schirmanlage (5) befestigt ist.

13. Treibhaus- oder Glashausanordnung nach einem der vorstehenden Ansprüche, wobei die Stabilisierungseinrichtung zumindest eine einzelne Strebe (41) umfasst, welche sich schräg zwischen der Schirmanlage (5) und der Abdeckung (1) oder einer Säule (31) erstreckt und welche schräg in Bezug zu einem Stoppprofil (6) gerichtet ist.

14. Treibhaus- oder Glashausanordnung nach Anspruch 13, wobei die Strebe (41) an dem Stoppprofil (6) befestigt ist.

15. Treibhaus- oder Glashausanordnung nach Anspruch 13 oder 14, wobei die Strebe (41) bei einem Winkel zu dem Stoppprofil (6) liegt, welcher sich von einem rechten Winkel unterscheidet.

## Revendications

1. Structure de serre ou de verrière, comprenant une couverture (1) constituée par des gouttières (2) et des arêtes (3) parallèles, et supportée par des colonnes (31), des panneaux transmettant la lumière (4) entre une gouttière (2) et une arête (3), ainsi qu'une installation d'écran (5) supportée sur les arêtes (3) et comportant des profils d'arrêt (6) s'étendant transversalement au-dessus des arêtes, des moyens de support (7) entre les arêtes (3) et les profils d'arrêt (6), des profils d'écran (8), des tissus d'écran (9), qui sont, dans chaque cas, disposés entre un profil d'arrêt (6) et un profil d'écran (8), ainsi que des moyens de guidage et d'entraînement (10) pour déplacer les profils d'écran (8) et les tissus d'écran (9) entre une position ouverte, dans laquelle les tissus d'écran (9) sont poussés les uns contre les autres de façon à former un paquet, dans chaque cas, entre un profil d'arrêt (6) et un profil d'écran (8), et une position fermée, dans laquelle les tissus d'écran (9) recouvrent une surface, **caractérisée en ce que** les moyens de fixation (11) des moyens de support (7) avec les profils d'arrêt (6) et/ou les moyens de fixation (12) des moyens de support (7) avec les arêtes (3) sont sensiblement sans couple vis-à-vis de rotations autour d'un axe de rotation parallèle aux arêtes (3) et **en ce que** des moyens de stabilisation (26) sont disposés pour stabiliser l'installation d'écran (5) par rapport à des forces et/ou à des mouvements qui sont dirigés transversalement aux arêtes (3).

2. Structure de serre ou de verrière selon la revendication 1, dans laquelle les moyens de support (7) comprennent des paires de supports (13) qui s'étendent vers le bas d'une manière divergente, dans chaque cas, d'un profil d'arrêt (6) à une arête (3) en dessous de celui-ci.

3. Structure de serre ou de verrière selon la revendication 2, dans laquelle les supports (13), à leur extrémité qui est tournée vers un profil d'arrêt (6), sont fixés de manière à ne pas pouvoir tourner les uns par rapport aux autres.

4. Structure de serre ou de verrière selon la revendication 2 ou 3, dans laquelle les moyens de fixation (11) des supports (13) au profil d'arrêt (6) comprennent une pièce de fixation (14) à laquelle sont fixés les supports (13), cette pièce de fixation (14) étant fixée d'une manière sans couple au profil d'arrêt (6).

5. Structure de serre ou de verrière selon la revendication 2 ou 3, dans laquelle les supports (13) comportent chacun un bloc de fixation (37), ces blocs de fixation (37) étant fixés les uns aux autres et reliés au profil d'arrêt (6) d'une manière sans couple.

6. Structure de serre ou de verrière selon la revendication 5, dans laquelle les blocs de fixation (37) fixés les uns aux autres forment un trou traversant (40) dans lequel une broche d'articulation (19) est insérée, celle-ci étant fixée au profil d'arrêt (6).

7. Structure de serre ou de verrière selon l'une des revendications 2 à 6, dans laquelle des pinces d'arête (20) sont disposées, celles-ci étant serrées sur une arête (3), un support (13) étant, dans chaque cas, fixé à ces pinces d'arête (20) d'une manière sans couple.

8. Structure de serre ou de verrière selon la revendication 7, dans laquelle chaque pince d'arête (20) comprend une broche (21) qui s'étend parallèlement à l'arête, et à laquelle, dans chaque cas, est fixé un support (13).

9. Structure de serre ou de verrière selon la revendication 8, dans lequel la broche (21) s'étend entre deux selles (22) disposées sur la pince d'arête (20), et l'extrémité du support (13) qui est tournée vers l'arête (3) est reçue entre les selles (22) et comporte un trou (23) à travers lequel s'étend la broche (21).

10. Structure de serre ou de verrière selon l'une des revendications 2 à 9, dans laquelle les supports comprennent des tubes (13) ou des tiges, qui, dans chaque cas, sont munis d'une lèvre de fixation (24) sur l'extrémité qui est tournée vers le profil d'arrêt (6) et sur l'extrémité qui est tournée vers l'arête (3).

11. Structure de serre ou de verrière selon l'une des revendications précédentes, dans laquelle la couverture (1) comprend des barres (25) qui s'étendent en oblique vers le haut par paires à partir de deux gouttières voisines (2) vers une arête (3), et les panneaux transmettant la lumière (4) sont, dans chaque cas, reçus entre deux barres (25).

12. Structure de serre ou de verrière selon l'une des revendications précédentes, dans laquelle les moyens de stabilisation comprennent au moins un montant (26) fixé à une colonne (31) ou à la couverture (1), ce montant (26) étant fixé à l'installation d'écran (5).

13. Structure de serre ou de verrière selon l'une des revendications précédentes, dans laquelle les moyens de stabilisation comprennent au moins une entretoise (41) qui s'étend en oblique entre l'installation d'écran (5) et la couverture (1) ou une colonne (31), et qui est dirigée en oblique par rapport à un profil d'arrêt (6).

14. Structure de serre ou de verrière selon la revendication 13, dans laquelle l'entretoise (41) est fixée au profil d'arrêt (6).

15. Structure de serre ou de verrière selon la revendication 13 ou 14, dans laquelle l'entretoise (41) présente un angle par rapport au profil d'arrêt (6) qui est différent d'un angle droit.
